# EUROPEAN PATENT APPLICATION

(11) **EP 3 840 141 A1**
(43) Date of publication of application: **23.06.2021**
(21) Application number: 19306663.6
(22) Date of filing: 17.12.2019
(51) Int. Cl.: H02B 1/052

(54) **CLAMP DEVICE FOR A SUPPORT RAIL**

(71) Applicant: Connecteurs Electriques Deutsch, 27000 Evreux Cedex 09 (FR)
(72) Inventor: ALIBERT, Jean-Luc, 27320 La Madeleine-de-Nonancourt (FR); CASSAR, Thierry, 27930 CAMPAGNE (FR)
(74) Representative: Grünecker Patent- und Rechtsanwälte PartG mbB

(57) **Abstract**

The present disclosure provides a clamp device for a support rail, the clamp device comprising a housing extending in a length direction and a width direction and comprising an elastically deformable clip portion at a first end of the housing along the length direction and a portion comprising a notch at a second end of the housing along the length direction that is opposite to the first end, a panel member at least partially arranged in the housing such that it extends along the length direction of the housing and a spring member at least partially arranged in the housing such that it extends along the length direction of the housing.

## Description

### Field of the Invention

The invention relates to a clamp device for a support rail, in particular, a clamp device that can be arranged on the support rail in order to separate modules attached to the support rail from each other or to secure the modules at an end of the support rail.

### Background of the Invention

Fixing systems that affix, i.e. mechanically connect, a plurality of similar or identical modules to some support rail are used in a number of technical applications. Frequent examples are electrical systems connecting a plurality of electric or electronic modules to a support rail that itself may be fixed to some ground or bottom. Electrical fixing systems may be used in a number of power and/or data distribution systems such as terminal blocks or network racks.

Particularly, in the case of electrical and electronic systems both a stable mechanical connection of the modules to the support rail and electric or electronic connection between power or data cables via the modules must be guaranteed.

The mechanical securement of the modules at ends of the support rails and, depending on the design choices, the separation of groups of modules or individual modules on the support rail have to be guaranteed. In the art rail end fixtures are known that are fixed to an end portion of a support rail by means of screws. However, affixing and removing such rail end fixtures is time consuming and can only be managed by the use of suitable tools. Moreover, accurate pre-positioning before fastening the screws is need during the installation process. Thus, handling of the rail end fixtures of the art is a relatively cumbersome procedure.

Consequently, there is a need to provide a rail fixture for a support rail for securing modules attached to the support rail that allows for quick and easy installment and removal.

### Description of the Invention

The invention provides a clamp device for a support rail, the clamp device comprising
a housing extending in a length direction and a width direction and comprising a (elastic and deformable) clip portion at a first end of the housing along the length direction and a portion comprising a notch at a second end of the housing along the length direction that is opposite to the first end;
a panel (tab) member at least partially arranged in the housing such that it extends along the length direction of the housing; and
a spring member at least partially arranged in the housing such that it extends along the length direction of the housing.

It is noted that here and in the following by the term "support rail" any kind of rail might be comprised, in principle.

The clamp device can be affixed to the support rail by means of the panel member and the spring member. No screws or similar fastening means are needed for affixing the clamp device to the support rail and no tools are needed for affixing the clamp device to the support rail or removing it from the support rail. Therefore, installment and removal of the clamp device can be carried out much faster and easier as compared to the installment and removal of rail fixture of the art. The clamp device is affixed due to action and counteraction facilitated by the panel member and the spring member. A press fit connection can be established between the clamp device and the support rail. In a state in that the clamp device is affixed to the support rail the panel member, the spring member and the notch portion are in contact with some interlocking means of the support rail, for example, a rim of the support rail.

The housing can be made of or may comprise a plastic material that, in particular, allows for some elastic deformation, in particular, elastic deformation of the clip portion during a process of affixing the clamp device to the support rail or a process of removing the clamp device from the support rail. The spring member and the panel member may be made of or comprises a metal (alloy) material, for example, the same material. By employment of an appropriate metal material the clamp device can be made relatively immune against temperature variations in the environment as well as mechanical vibrations. Moreover, a strong pinching with the support rail is achieved by such a configuration and strong forces can be generated between the relatively soft housing and the hard pinching.

According to an embodiment the panel member protrudes from the first and and/or second end of the housing in the length direction of the housing in order to allow for a mechanical contact with the interlocking means of the support rail. Moreover, the spring member may protrude from the second end of the housing in the length direction of the housing in order to allow for a mechanical contact with the interlocking means of the support rail.

The spring member may extend partially into the clip portion or to a side surface of the clip portion in order to facilitate a clamping action when affixing the clamp device to the (interlocking means of the) support rail.

According to a further embodiment the spring member is at least partially S-shaped, particularly, within the housing. The S-shape may facilitate some counteraction to an action/force applied to the spring member at a protruding portion near the second end of the housing caused by mechanical interaction with the interlocking means of the support rail during a process of affixing the clamp device to the support rail.

According to a further embodiment the clip portion comprises another notch facilitating affixing/clamping the clamp device to the support rail at the first end of the housing of the clamp device.

It is noted that in all of the above-described embodiments the panel member and/or the spring member may have a width in the width direction of the housing that is less than the width of the housing in the width direction of the housing. Thereby, the overall weight and costs of the clamp device can be reduced and the panel member and/or the spring member can be properly guided within the housing.

Moreover, the panel member and the spring member may cross each other at least once within the housing of the clamp device. In particular, the panel member and the spring member may be attached to each other at least at one (leverage) point within the housing.

In order to facilitate the handling of the clamp device the housing of the same may comprise a first gripping means configured and arranged for operation (by the hand of a user) during installment of the clamp device on the support rail and a second gripping means different from the first gripping means configured and arranged for operation (by the hand of the user) during removal of the clamp device from the support rail. At least one of the provided first and second gripping means may comprise or consist of a plurality of riffles formed in the surface of the housing.

In addition, it is provided a fixing system that comprises a support rail having first interlocking means arranged along the support rail and a plurality of modules attached to the support rail by means of second interlocking means being in engagement with the first interlocking means of the support rail, and the clamp device according to one of the above-described examples and attached to the support rail by means of the clip portion and the spring member of the clamp device and the first interlocking means of the support rail. The modules may provide electrical connections and comprises, accordingly, electrical connectors. The modules may be different modules, for example, in terms of the number of electrical contacts. A channel may be provided along the support rail and the channel may be essentially U-shaped. Some rims (perpendicular to the U-legs) may be formed atop of the U-legs that may serve as the first interlocking means of the support rail. Moreover, the U-shape of the channel built in the support rail may include U-legs of different heights. The length direction of the clamp device extends along a width direction of the support rail that runs along a length/longitudinal direction with a length that significantly exceeds the dimension of the width of the housing of the clamp device in the width direction. The clamp device may represent an end clamp arranged at an end of the support rail for securing modules arranged on the support rail.

Furthermore, it is provided a modular power connection system comprising a support rail, a plurality of modules designed for electrical connection of conductive cables and being attached to the support rail, and the clamp device according to the above-described examples and being attached to the support rail by means of the clip portion and the spring member of the clamp device. Each module may be configured to provide electrical connection of at least two feeder cables. To this end, the modules may include electrical connectors with at least two electrical contacts. In particular, one electrical contact may be provided for each of the at least two feeder cables.

Both the fixing system and the modular power connection system can be configured to be attached to some ground or bottom, for example, the bottom of a vehicle, in particular, the bottom of an aircraft. Attachment can be achieved via an appropriate mounting plate, for example, a so-called umbrella used for installment in an aircraft.

The above-mentioned need is also addressed by providing a method of affixing a clamp device to a support rail, comprising the steps of providing the clamp device according to one of the above-described examples and pushing by a user's hand the provided clamp device towards interlocking means of the support rail, in particular, by means of the first gripping means, such that the panel member, the spring member and the notch portion come into mechanical contact with the interlocking means of the support rail at the second end of the housing and the panel member and the clip portion (via a notch in exemplary embodiments), the clip portion undergoing elastic deformation, come into mechanical contact with the interlocking means of the support rail at the first end of the housing.

Furthermore, it is provided a method of removing a clamp device according to one of the above-described examples from a support rail to which it is attached, comprising the steps of pushing the second gripping means by a user's hand in order to elastically deform the clip portion (towards an inner edge of the housing spaced apart from the clip portion) and moving it away from the interlocking means of the support rail and pulling the thus handled clamp device from the support rail.

Both methods are advantageous with respect to the teaching of the prior art in that no tools, for example, for operating screws or similar fastening means, for the procedures of affixing the clamp device to the support rail or removing the clamp device from the support rail are needed. Installment and removal of the clamp device can be carried out much faster as compared to installment and removal of fixture device on and from, respectively, a support rail.

Further features and exemplary embodiments as well as advantages of the present disclosure will be explained in detail with respect to the drawings. It is understood that the present disclosure should not be construed as being limited by the description of the following embodiments. It should furthermore be understood that some or all of the features described in the following may also be combined in alternative ways.
- Figures 1a and 1b: show a clamp device comprising a panel member and a spring member according to an embodiment of the present invention.
- Figure 2: shows a fixing system comprising a clamp device affixed to a support rail according to an embodiment of the present invention.
- Figures 3a and 3b: show a side view of a clamp device comprising a panel member and a spring member that is not affixed to a support rail according to an embodiment of the present invention.
- Figures 4a and 4b: show side views of a clamp device comprising a panel member and a spring member that is affixed to a support rail according to an embodiment of the present invention.
- Figure 5: shows another embodiment of a clamp device according to the present invention wherein a spring member extends to a clip portion of a housing of the clamp device.

The present invention provides a clamp device for a support rail that can secure modules attached to the support rail at an end of the support rail or separate modules attached to the support rail from each other (individually or in groups). The clamp device secures the positions of one or more modules affixed to the support rail in a direction along the support rail. Different from the art the provided clamp device can be affixed to and removed from the support rail without the need of employing any tool as, for example, a screw driver. In fact, the clamp device provided herein can be affixed to the support rail without any screws or similar fastening means. In addition, the clamp device does not need to be carefully positioned/aligned/oriented before attachment to the support rail. Moreover, the clamp device does not tend to open the support rail and create a gap with modules that are already attached to the support rail.

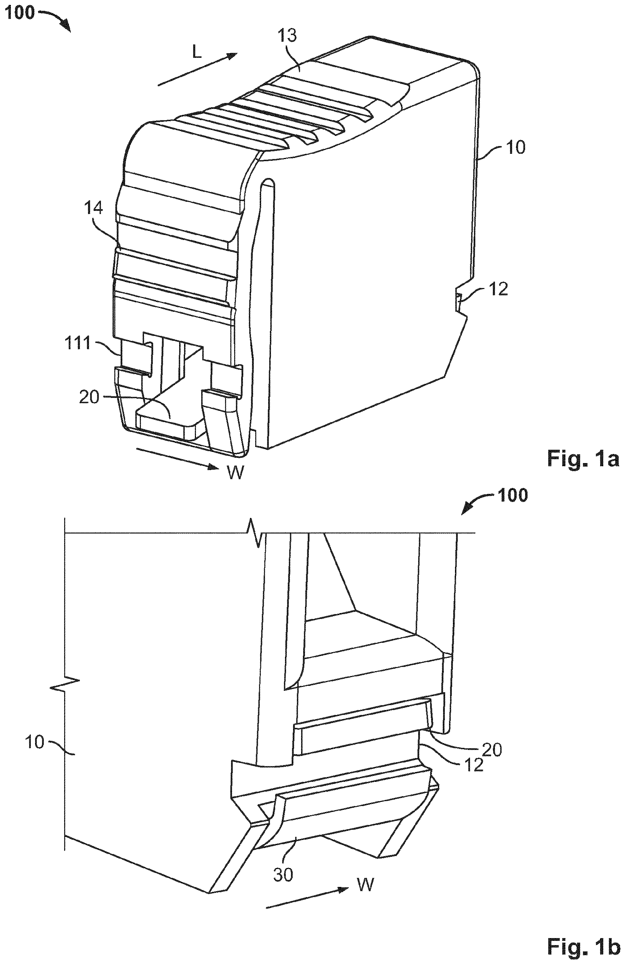

An exemplary clamp device 100 according to the present invention is illustrated in Figures 1a and 1b. The clamp device 100 comprises a housing 10 made of a plastic material. The housing has a substantially rectangular shape with a longer dimension in the length direction L than in the width direction W. At a first end of the housing 10 in the length direction L a clip portion 11 is provided and at a second end of the housing 10 opposite to the first end the housing 10 comprises a notch portion 12. The clip portion 11 is integrally formed with the rest of the housing 10 and comprises another notch portion 111.

The housing 10 houses a panel member 20 that at the first end of the housing 10 protrudes from the housing 10, in particular, from the clip portion 11. The panel member 20 extends all along the length of the housing 10 and ends at the second end of the housing in the notch portion 12 of the same and may slightly protrude from the notch portion 12. Additionally, the housing 10 houses a spring member 30 that at the second end of the housing 10 protrudes from the housing 10, in particular, from the notch portion 12. The spring member 30 is elastically deformable and provides some spring tension. It may be a leaf spring. The width of the panel member 20 and the spring member 30 may be smaller than the width of the housing 10. The length of the clamp device 100 may be in the range of a few centimeters to about ten centimeters, for example, the width may be in the range of one to 3 centimeters, for example, and the height may be in the range of five to about 10 centimeters, for example. The weight of the clamp device 100 can be a few grams only.

The housing 10 may be made of some suitable elastically deformable plastic material, for example, a thermoplastic elastomer or polymer or a polyethylene material. The panel member 20 and the spring member 30 may be made of a metal material or metal alloy, for example, comprising stainless steel, in order to provide temperature resistance for the clamp device 100 in operation. The handling of the clamp device 10 is facilitated by a gripping means 13 provided at the top surface of the housing 10 and another gripping means 14 provided on a surface of the clip portion 11. Both gripping means 13, 14 can be realized by riffles that are formed in the plastic material of the housing and allow for a secure handling by a user's hand.

It is noted that the clamp device 100 represents a single integrated device that, particularly, is reliably protected against pollution by the housing, for example, during loss in an aircraft or other room of installment. For example, the housing may be formed by injection molding.

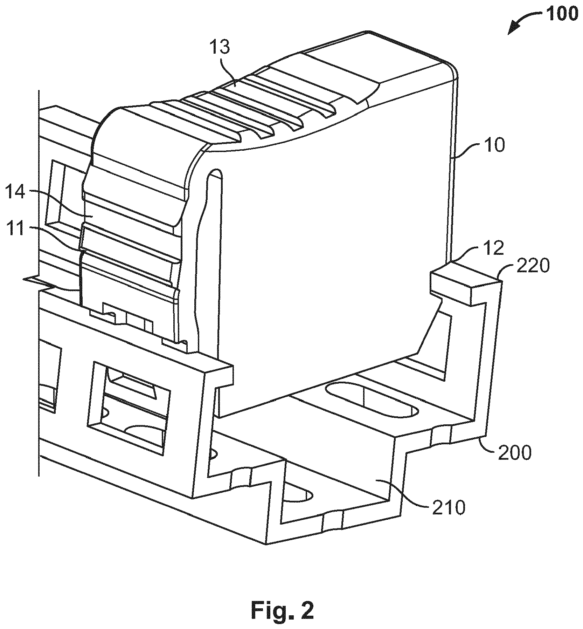

Figure 2 illustrates a fixing system comprising a clamp device 100 affixed to an end of a support rail 200 (with the length direction of the clamp device 100 being arranged perpendicular to a length direction of the support rail). The support rail 200 comprises a channel portion 210 and interlocking means 220 at an upper end of a U-shaped portion. The interlocking means 220 on both sides of the channel portion 201 may be located at different heights. The design of the inventive clamp device 100 can be adapted to symmetrical or asymmetrical (with respect to the height) support rails by correspondingly locating the notch portion 12 of the housing 10, for example. The support rail 200 may be attached to some ground or bottom, for example, a metal plate attached a bottom of an aircraft. The clamp device 100 is provided to mechanically secure modules (not shown in Figure 2), for example, a plurality of modules for electrical connection of conductive cables, that attached to the support rail 200. The same kind of clamp device 100 can be used to separate individual or groups of modules from each other.

The clamp device 100 has been pushed by a user's hand contacting the gripping means 13 provided on the top surface of the housing 10 in order to affix the clamp device 100 to the support rail 200 as it is shown in Figure 2. The clamp device 100 is affixed to the support rail 200 *inter alia* by means of the clip portion 11 and the notch portion 12 of the housing 10. In course of the pushing movement the notch portion 12 and the clip portion 11 engage with the interlocking means 220 of the support rail 200. The clip portion 11 is pushed inwardly. Engagement of the clip portion 11 with the interlocking means 220 of the support rail 200 is facilitated by the notch portion 111 of the clip portion 11 illustrated in Figures 1a and 1b. By arresting the notch 111 the clamp device 100 is locked.

In fact, the clamp device 100 according to the invention can be affixed to the support rail 200 in about a few seconds as compared to a lot more, for example, at least seventeen seconds, needed to install a conventional fixing device by means of screws or similar fastening means. In order to remove the clamp device 100 from the support rail 200 a user may push the clip portion 11 even more inwardly (away from the interlocking means 220) and pull the clamp device 100 in a vertical direction away from the support rail. No tools are needed for the attachment of the clamp device 100 to the support rail 200 or the removal of the clamp device 100 from the support rail 200. It should also be noted that the support rail 200 does not show any deformation during and after the installment of the clamp device 100.

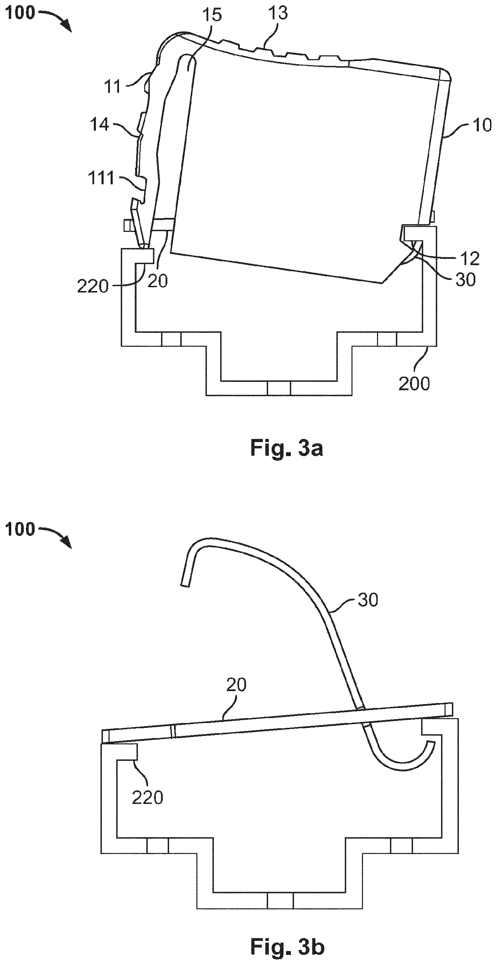

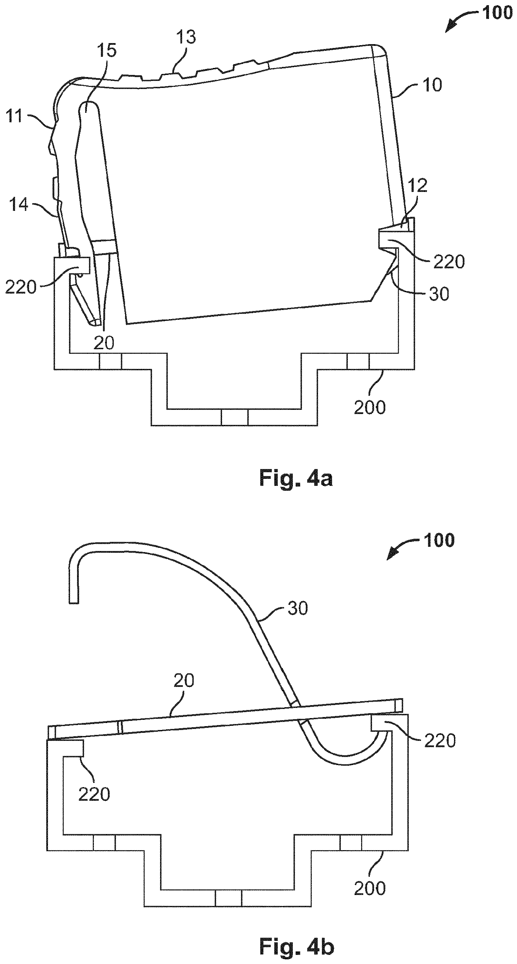

Further details of a clamp device 100 are illustrated in Figures 3a, 3b, 4a and 4b. Figures 3a and 3b show the clamp device 10 in a state in that it is not affixed to a support rail 200. Figures 4a and 4b show the clamp device 10 in a state in that it is affixed to the support rail 200. As can be clearly seen in Figures 3a and 4a an interspace is formed between the clip portion 11 of the housing 10 and an inner edge 15 of the housing 10. In the state shown in Figures 3a and 3b the notch portion 12 is already in contact with an interlocking means (rim) of the support rail 200. At the first end of the housing 10 the panel member 20 not yet contacts the interlocking means (rim) of the support rail 200. In order to affix the clamp device 100 to the support rail 200 a user has to push the clamp device 100 towards the support rail 200, for example, by contacting the gripping means 13. Figure 3b illustrates the arrangement of the panel member 20 and the spring member 30 that are partially housed by the housing 10. The panel member 20 and the spring member 30 can be attached to each other at some connection point. In the example shown in Figures 3a to 4b the spring member 30 does not extend to the clip portion 11 of the housing 10.

Figures 4a and 4b show the clamp device 100 affixed to the support rail 200. In this affixed state the panel member 20 at both ends contacts the interlocking means 220 of the support rail 200. The notch portion 111 of the clip portion 11 of the housing engages the interlocking means 220 of the support rail 200. Further, the spring member 30 contacts the interlocking means 220 at the second end of the housing 10. By means of the panel member 20 and the spring member 30 the clamp device 10 can be press fitted to the interlocking means 220 of the support rail 200. By pushing the clip portion 11 inwardly (away from the interlocking means 220) using the gripping means 14 formed on the clip portion 11 and pulling the clamp device vertically away from the support rail 200 the clamp device can be removed from the support rail 200.

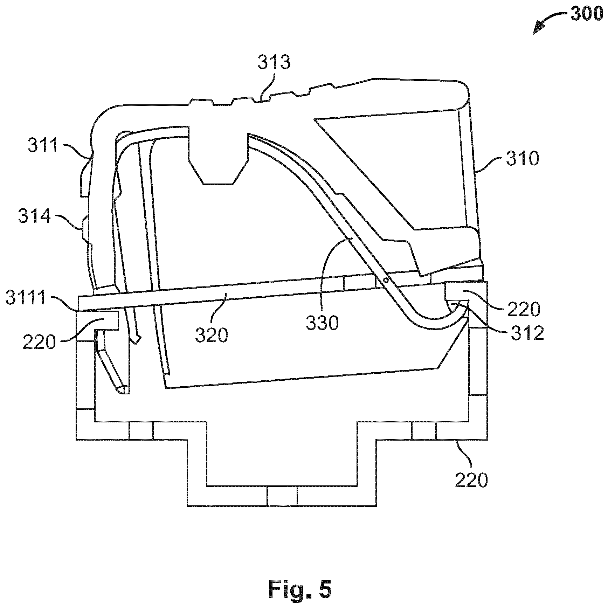

Another embodiment of an inventive clamp device 300 is shown in Figure 5. The housing 310 accommodates a panel member 320 and a spring member 330. Different from the embodiment illustrated in Figures 1 to 4b the spring member 330 extends to the clip portion 311. For example, the spring member 330 may be at least partially guided within at least a part of the clip portion 311. The spring member 330 can at least partially run along an upper surface of the clip portion 311. In any case, in the embodiment illustrated in Figure 5 any elastic deformation of the clip portion 311 is directly transferred to the spring member 330. Thereby, a reliable fastening of the clamp device 300 to a support rail and a long life time in harsh environments can be achieved.

Gripping means 313, 314 are provided to facilitate the handling of the clamp device 300 as it was described above. In the affixed (to the support rail) state shown in Figure 4 the clamp device 300 is in press fit with the support rail 200 via the notch portion 312, the panel member 320, the spring member 330 and the notch portion 3111 provided in the clip portion 311 of the housing 310. This press fit (as in the embodiments described with reference to Figures 1 to 4b) provides a very secure and reliable connection between the clamp device 300 (100) and the support rail 200 due to the combination and arrangement of the different elements involved in the formation the connection.

### List of reference numbers:

- 100, 300: clamp device
- 10,310: housing
- 11, 311: clip portion
- 12, 312: notch portion
- 13, 313: gripping means
- 14, 314: gripping means
- 15: inner edge of housing
- 20, 320: panel member
- 30, 330: spring member
- 111, 3111: notch portion
- 200: support rail
- 210: channel portion
- 220: interlocking means

## Claims

1. Clamp device for a support rail, comprising
a housing extending in a length direction and a width direction and comprising an elastically deformable clip portion at a first end along the length direction and a portion comprising a notch at a second end along the length direction that is opposite to the first end;
a panel member at least partially arranged in the housing such that it extends along the length direction of the housing; and
a spring member at least partially arranged in the housing such that it extends along the length direction of the housing.

2. The clamp device according to claim 1, wherein
the panel member protrudes from the first and and/or second end of the housing in the length direction of the housing.

3. The clamp device according to claim 1 or 2, wherein
the spring member protrudes from the second end of the housing in the length direction of the housing.

4. The clamp device according to one of the preceding claims, wherein the spring member extends partially into the clip portion or to a side surface of the clip portion.

5. The clamp device according to one of the preceding claims, wherein the spring member is at least partially S-shaped.

6. The clamp device according to claim 5, wherein the spring member is at least partially S-shaped within the housing.

7. The clamp device according to one of the preceding claims, wherein the clip portion comprises another notch.

8. The clamp device according to one of the preceding claims, wherein the panel member and/or the spring member has a width in the width direction of the housing that is less than the width of the housing in the width direction of the housing.

9. The clamp device according to one of the preceding claims, wherein the panel member and/or the spring member is made of or comprises a metal material, in particular, the same metal material and/or the housing is made of or comprises a plastic material.

10. The clamp device according to one of the preceding claims, wherein the panel member and the spring member cross each other at least once within the housing and/or the panel member and the spring member are attached to each other within the housing.

11. The clamp device according to one of the preceding claims, wherein the housing comprises a first gripping means configured and arranged for operation during installment of the clamp device on the support rail and a second gripping means different from the first gripping means configured and arranged for operation during removal of the clamp device from the support rail.

12. A fixing system, comprising:
a support rail having first interlocking means arranged along the support rail; and
a plurality of modules attached to the support rail by means of second interlocking means being in engagement with the first interlocking means of the support rail; and
the clamp device according to one of the preceding claims and attached to the support rail by the clip portion and the spring member of the clamp device and the first interlocking means.

13. Modular power connection system, comprising:
a support rail;
a plurality of modules for electrical connection of conductive cables attached to the support rail, and
the clamp device according to one of the claims 1 to 11 attached to the support rail by the clip portion and the spring member of the clamp device.

14. Method of affixing a clamp device to a support rail, comprising the steps of
providing the clamp device according to claim 11; and
pushing by a user's hand the provided clamp device towards interlocking means of the support rail by means of the first gripping means such that the panel member, the spring member and the notch portion come into mechanical contact with the interlocking means of the support rail at the second end of the housing and the panel member and the clip portion, the clip portion undergoing elastic deformation, come into mechanical contact with the interlocking means of the support rail at the first end of the housing.

15. Method of removing a clamp device according to claim 11 from a support rail to which it is attached, comprising the steps of
pushing the second gripping means by a user's hand in order to elastically deform the clip portion; and
pulling the clamp device from the support rail.
